# FASCICULE DE BREVET EUROPEEN

(11) **EP 2 541 642 B1**
(45) Date de publication et mention de la délivrance du brevet: **13.08.2014**
(21) Numéro de dépôt: 12174132.6
(22) Date de dépôt: 28.06.2012
(51) Int. Cl.: H01M 2/12, H01M 10/0525

(54) **Dispositif de sécurité pour accumulateur étanche**
Schutzvorrichtung für wasserdichten Akkumulator
Safety device for sealed battery

(30) Priorité: 01.07.2011 FR 1155972
(43) Date de publication de la demande: 02.01.2013
(73) Titulaire: SAFT GROUPE SA, 93170 Bagnolet (FR)
(72) Inventeur: Mermillod-Blondin, Luc, 74450 SAINT JEAN DE SIXT (FR); Rigobert, Gérard, 33370 FARGUES St HILAIRE (FR); Gaulet, Florian, 33140 VILLENAVE D'ORNON (FR)
(74) Mandataire: Hirsch & Associés

(56) Documents cités:
- EP-A1- 1 126 534
- EP-A1- 2 270 899
- JP-A- 11 329 402
- US-A1- 2011 123 845

## Description

### DOMAINE TECHNIQUE

La présente invention se rapporte au domaine des dispositifs de sécurité pour accumulateurs étanches, en particulier les accumulateurs de type lithium-ion.

### ART ANTERIEUR

Un accumulateur étanche ou générateur électrochimique étanche (ces deux termes étant équivalents, on utilisera le terme d'accumulateur dans la présente description) comprend de façon connue en soi un conteneur contenant un faisceau électrochimique, lequel faisceau comporte une alternance d'électrodes positives et négatives encadrant des séparateurs imprégnés d'électrolyte. Chaque électrode est composée d'un collecteur de courant métallique supportant sur au moins une de ses faces une matière électrochimiquement active. L'électrode est connectée électriquement à une borne de sortie de courant qui assure la continuité électrique entre l'électrode et l'application extérieure à laquelle l'accumulateur est associé. Le faisceau d'électrodes est disposé dans un conteneur fermé de manière étanche par un couvercle.

L'utilisation d'un accumulateur étanche hors des conditions nominales, comme par exemple lors d'une surcharge accidentelle, d'un court-circuit, ou lors d'une exposition à une température supérieure à la température maximale de fonctionnement, crée un risque d'explosion. En effet, de telles situations entraînent des réactions de l'électrochimie qui génèrent des gaz dans le conteneur de l'accumulateur. L'accumulation de ces gaz entraîne une augmentation de la pression interne de l'accumulateur, qui peut conduire à un éclatement violent du conteneur et à la projection de composés chimiques nocifs et corrosifs pour l'environnement et les personnes situées à proximité.

Des dispositifs de sécurité existent, qui évitent l'accumulation des gaz à l'intérieur du conteneur d'un accumulateur étanche et permettent leur évacuation lorsque la pression interne excède une valeur prédéterminée. Certains de ces dispositifs possèdent également la fonction de coupe-circuit, c'est-à-dire qu'ils sont aussi aptes à isoler électriquement et de façon irréversible, les appareils connectés à l' accumulateur.

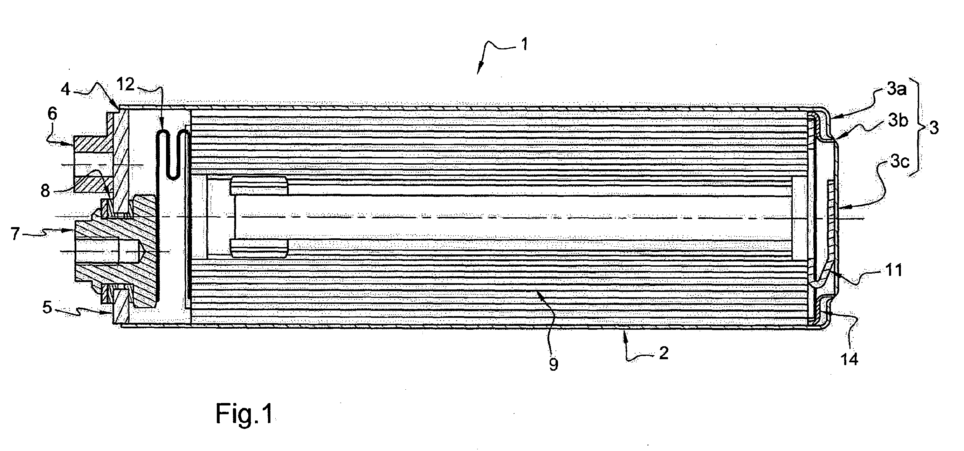

Le document FR-A-2 873 495 décrit un accumulateur comprenant un dispositif de sécurité combinant la fonction de soupape de sécurité et celle de coupe-circuit. Une vue en coupe longitudinale de cet accumulateur est représentée Figure 1.

L'accumulateur (1) comprend une alternance d'électrodes positives et négatives respectivement reliées à des bornes de sortie de courant (6,7). Les électrodes sont disposées dans un conteneur (2) présentant une paroi latérale cylindrique obturée à l'une de ses extrémités par un fond (3) et à l'extrémité opposée (4) par un couvercle (5). Le fond est formé de trois parties : une partie périphérique (3a) reliée électriquement à la paroi latérale, un opercule (3c) et un amincissement (3b) reliant l'opercule à la partie périphérique. Une première connexion plane (11) raccorde l'électrode positive du faisceau électrochimique (9) à la paroi du fond du conteneur, la paroi du fond du conteneur étant électriquement conductrice avec le couvercle. Sur le couvercle est soudée la borne de sortie de courant positive (6). Une seconde connexion plane (12) raccorde l'électrode négative du faisceau à la borne de sortie de courant négative (7). La borne de sortie de courant négative passe à travers le couvercle. Un joint (8) isole électriquement la borne de sortie de courant négative du couvercle. Un joint en forme d'anneau (14) est placé entre le faisceau électrochimique et le fond du conteneur. Il sert d'isolant électrique afin d'empêcher un contact électrique entre la tranche d'une électrode négative du faisceau et la paroi du conteneur reliée à la borne positive, ce qui occasionnerait un court-circuit après que le dispositif de sécurité ait été activé. Une déchirure de l'amincissement est adaptée à interrompre la conduction électrique entre les électrodes d'une polarité et leur borne de sortie de courant associée en déconnectant l'opercule de la partie périphérique. Le faisceau est en appui sur la pièce de connexion (11) située dans le fond du conteneur. Lors d'une surpression, la partie amincie se déchire et le faisceau en appui sur l'opercule par le biais de la pièce de connexion se déplace vers le fond du conteneur déchirant la totalité de la partie amincie afin d'assurer la coupure électrique entre l'électrode positive du faisceau électrochimique et le couvercle du conteneur.

Or, le conteneur de l'accumulateur peut ne pas remplir de manière fiable son rôle de coupe-circuit. En effet, la déchirure de l'amincissement peut être partielle, auquel cas un courant électrique est susceptible de circuler par l'amincissement non déchiré. Comme l'amincissement non déchiré est en contact électrique avec la paroi latérale cylindrique du conteneur, un courant électrique peut circuler par la paroi latérale cylindrique jusqu'au couvercle qui supporte les bornes de sortie de courant. Or, l'une des deux bornes de sortie de courant est en contact électrique avec le couvercle. Il est donc possible que le consommateur électrique continue d'être alimenté en courant malgré la déchirure de l'amincissement. Il n'est donc pas dans ce cas totalement isolé électriquement de l'accumulateur. On recherche donc un accumulateur comprenant un dispositif de sécurité assurant de manière fiable sa fonction de coupe-circuit.

Le document EP 2 270 899 décrit une conteneur d'accumulateur ayant une paroi formant un fond comprenant une partie périphérique, un opercule et une partie fragilisée adaptée à se rompre lors d'une surpression à l'intérieur du conteneur.

### RESUME DE L'INVENTION

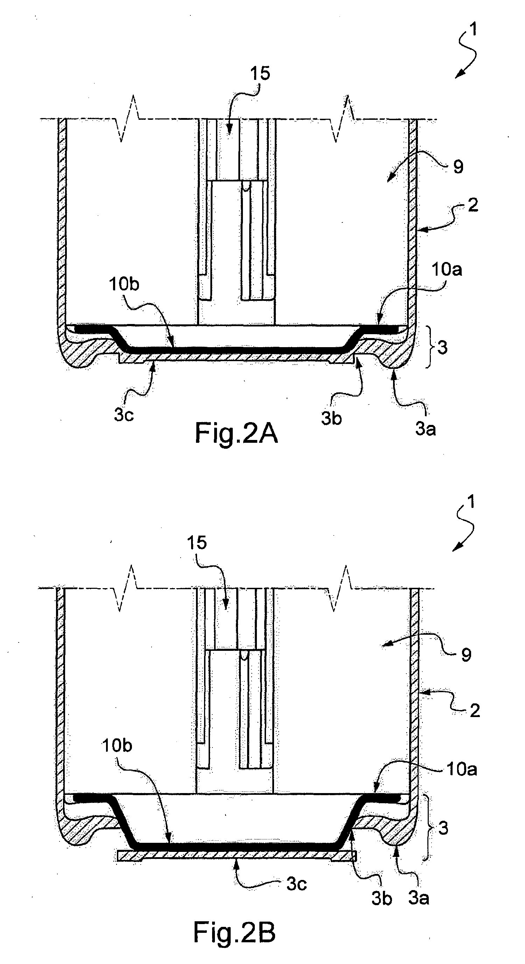

A cette fin, la présente invention propose, comme représenté sur la Figure 2A, un conteneur d'accumulateur étanche destiné à contenir un faisceau électrochimique, le conteneur comprenant une paroi formant un fond en matière conductrice électriquement comprenant :
- une partie périphérique,
- un opercule,
- une partie fragilisée délimitant l'opercule, joignant la partie périphérique à l'opercule, adaptée à se rompre lors d'une surpression à l'intérieur du conteneur,
dans lequel conteneur est disposée une membrane déformable conductrice électriquement reliant électriquement des électrodes d'une même polarité d'un faisceau électrochimique à l'opercule,
et dans lequel conteneur, une surpression provoque une déformation de la membrane, cette déformation entraînant une rupture de la partie fragilisée.

Selon un mode de réalisation, une pièce de connexion est disposée à l'intérieur du conteneur. Elle relie électriquement les électrodes de même polarité du faisceau électrochimique à la membrane déformable.

Selon un mode de réalisation, la membrane déformable a la forme d'un disque et présente une partie centrale et une partie périphérique, la limite entre la partie centrale et la partie périphérique coïncidant sensiblement avec la partie fragilisée, la partie périphérique de la membrane déformable coïncidant sensiblement avec la partie périphérique du fond du conteneur.

Selon un mode de réalisation, la membrane déformable comprend une partie centrale disposée au contact de l'opercule et une partie périphérique isolée électriquement de la pièce de connexion et de l'opercule.

Selon un mode de réalisation, la membrane déformable et/ou la pièce de connexion sont en aluminium.

Selon un mode de réalisation, la membrane déformable a une épaisseur comprise entre 100 et 400 microns.

Selon un mode de réalisation, la membrane déformable n'est pas ajourée.

Selon un mode de réalisation, la membrane déformable maintient le conteneur hermétiquement clos après rupture de la partie fragilisée.

Selon un mode de réalisation, la membrane déformable comprend au moins une partie fragilisée apte à se déchirer en cas de surpression à l'intérieur du conteneur, par exemple pour une surpression d'environ 15 bars.

Selon un mode de réalisation, la partie périphérique de la membrane déformable est recouverte d'une gaine d'un matériau isolant électrique.

Selon un mode de réalisation, la pièce de connexion comprend une partie de connexion en contact avec le faisceau électrochimique et une partie centrale en contact avec la membrane déformable.

Selon un mode de réalisation, la pièce de connexion comprend un groupe de lamelles flexibles, spiralées, identiques, réparties régulièrement et reliant la partie centrale à la partie de connexion.

Selon un mode de réalisation, la partie fragilisée a une épaisseur plus faible que celles de l'opercule et de la partie périphérique.

La présence de la membrane déformable a pour effet de retenir les gaz émis par les réactions électrochimiques internes de l'accumulateur. Elle oblige les gaz à exercer leur pression sur l'opercule jusqu'à sa déchirure complète.

L'invention propose aussi un accumulateur étanche comprenant :
- le conteneur tel que décrit ci-dessus,
- un faisceau électrochimique,
dans lequel une rupture de la partie fragilisée de la paroi du fond du conteneur est adaptée à interrompre la conduction électrique passant par l'opercule entre la membrane déformable et une borne de sortie de courant.

Selon un mode de réalisation, l'accumulateur est de type lithium-ion.

L'invention a également pour objet un procédé de réalisation d'une connexion électrique comprenant les étapes suivantes :
a) mise à disposition d'un faisceau électrochimique comprenant au moins une électrode positive et au moins une électrode négative séparées par un séparateur;
b) raccordement électrique d'une membrane déformable conductrice électriquement avec les électrodes d'une même polarité du faisceau électrochimique;
c) mise à disposition d'un conteneur comprenant une paroi formant un fond en matière conductrice électriquement comprenant :
   - une partie périphérique,
   - un opercule,
   - une partie fragilisée délimitant l'opercule, joignant la partie périphérique à l'opercule, adaptée à se rompre lors d'une surpression à l'intérieur du conteneur,
d) introduction dans le conteneur du faisceau électrochimique et de la membrane déformable de façon à ce que la membrane soit en contact avec l'opercule.

Selon un mode de réalisation, l'étape b) comprend les deux sous étapes suivantes :
i) raccordement électrique d'une pièce de connexion, autre qu'une membrane déformable conductrice électriquement, sur les électrodes d'une même polarité du faisceau électrochimique; puis
ii) raccordement électrique de la membrane déformable conductrice électriquement sur la pièce de connexion.

Selon un mode de réalisation, entre les étapes i) et ii), on enroule un film plastique isolant électrique autour du faisceau électrochimique en laissant libre au moins une partie de la pièce de connexion.

Selon un mode de réalisation, le film plastique est un film de polyimide.

Selon un mode de réalisation, le procédé comprend après l'étape d), une étape de soudure par laser de l'opercule avec la membrane déformable.

Selon un mode de réalisation, le procédé comprend après l'étape d), une étape de soudure par laser de l'opercule avec la membrane déformable et la pièce de connexion.

### BREVE DESCRIPTION DES FIGURES

D'autres caractéristiques et avantages de l'invention apparaîtront à la lecture de la description qui suit, donnée à titre d'exemple et en référence aux figures qui montrent :
La Figure 1 est une vue en coupe longitudinale d'un accumulateur comportant un dispositif de sécurité selon l'art antérieur.
Les Figures 2A et 2B sont des vues en coupe longitudinale du fond du conteneur selon l'invention. La Figure 2A représente le fond du conteneur dans des conditions nominales de fonctionnement de l'accumulateur. La Figure 2B représente le fond du conteneur après rupture de l'amincissement et détachement de l'opercule du fond du conteneur.
La Figure 3 représente une vue de dessus de la membrane déformable.
Les Figures 4A à 4E sont des exemples de coupe selon l'axe A-A' de la membrane déformable.
La Figure 5 représente une coupe transversale de la membrane déformable mettant en évidence l'enrobage de la partie périphérique par une gaine isolante électriquement.
Les Figures 6A à 6C représentent des vues de dessus de la membrane déformable en forme de disque dont la surface présente des exemples de formes de parties fragilisées qui sont :

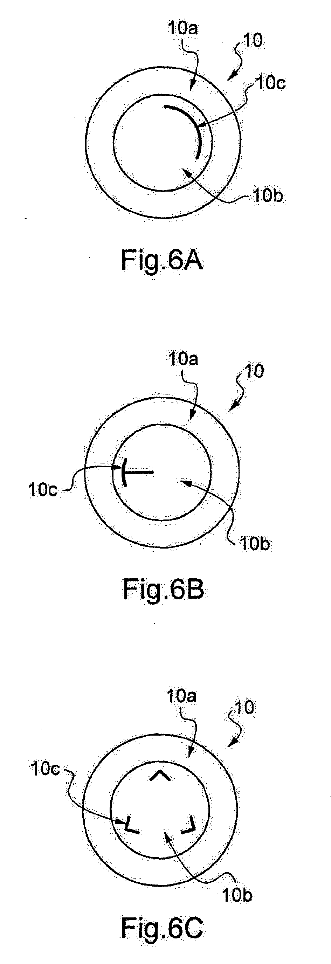

   - Figure 6A un amincissement en forme d'arc de cercle s'étendant sur environ un tiers de la circonférence du disque ;
   - Figure 6B un amincissement en forme d'arc de cercle en intersection avec un segment situé sur un rayon du disque ;
   - Figure 6C trois zones d'amincissement en forme d'équerre.

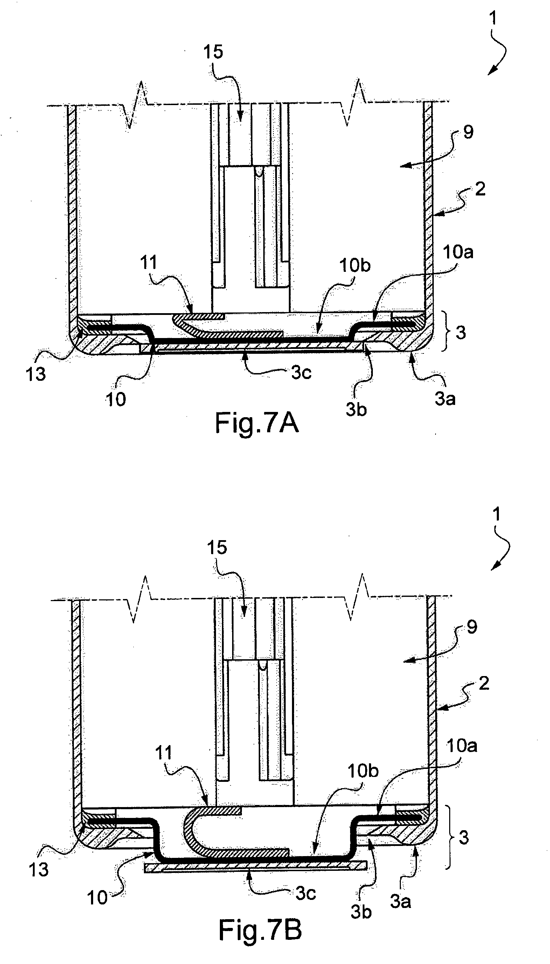

Les Figures 7A et 7B sont des vues en coupe longitudinale du fond du conteneur dans lequel la pièce de connexion est une languette métallique en forme de U. La Figure 7A représente le fond du conteneur dans des conditions nominales de fonctionnement de l'accumulateur. La Figure 7B représente le fond du conteneur après rupture de l'amincissement et détachement de l'opercule du fond du conteneur.

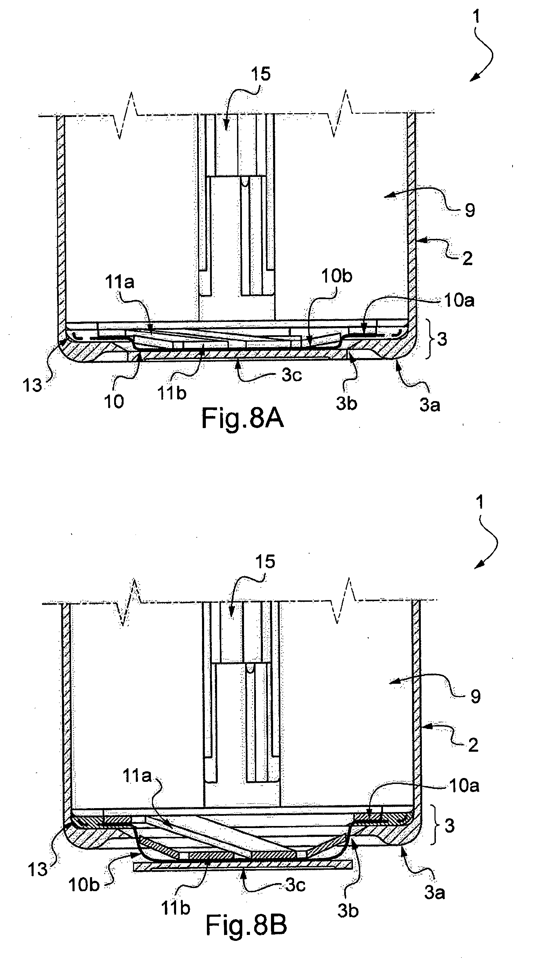

Les Figures 8A et 8B sont des vues en coupe longitudinale du fond du conteneur dans lequel la pièce de connexion comprend une partie de connexion destinée à être raccordée électriquement au faisceau électrochimique et une partie centrale en contact électrique avec l'opercule par l'intermédiaire de la membrane déformable, la pièce de connexion souple comprenant un groupe de lamelles flexibles, spiralées, identiques, réparties régulièrement et reliant la partie centrale à la partie de connexion. La Figure 8A représente le fond du conteneur dans des conditions nominales de fonctionnement. La Figure 8B représente le fond du conteneur après rupture de l'amincissement et détachement de l'opercule du fond du conteneur.

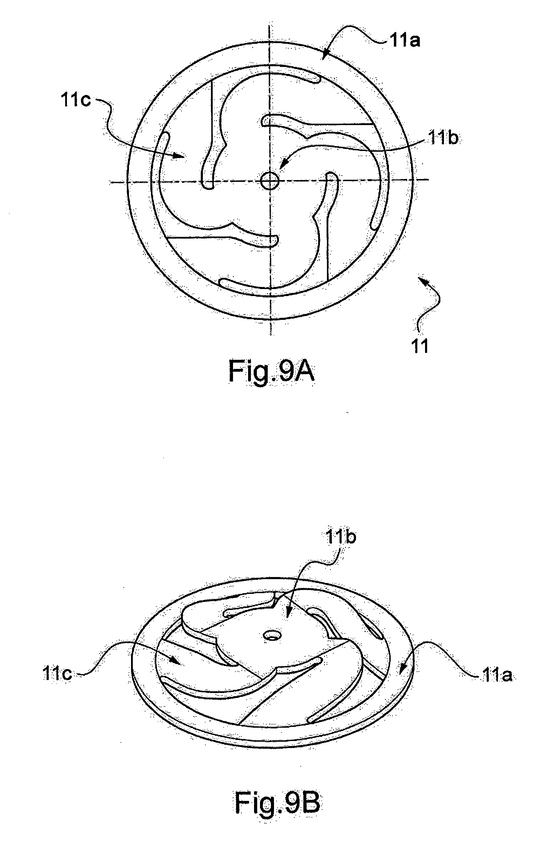

Les Figures 9A et 9B représentent respectivement une vue de dessus et une vue en perspective de la pièce de connexion utilisée dans le mode de réalisation illustré aux Figures 8A et 8B.

### EXPOSE DES MODES DE REALISATION

Dans les différents modes de réalisation décrits ci-après, le format du conteneur est cylindrique mais il est entendu que l'invention s'applique à d'autres formats de conteneurs, tels que le format parallélépipédique (ou prismatique).

Un premier mode de réalisation est illustré aux Figures 2A et 2B.

L'accumulateur (1) comprend un conteneur présentant une paroi latérale (2) obturée par un fond (3) à l'une de ses extrémités. Un couvercle (non représenté) est placé sur l'extrémité ouverte et clôt le conteneur de manière hermétique. Le couvercle supporte les bornes de sortie de courant positive et négative (non représentées). Une des bornes de sortie de courant est soudée sur le couvercle. L'autre borne de sortie de courant passe à travers le couvercle. Elle est fixée sur celui-ci par tout moyen tel que vissage ou sertissage. Un joint isole électriquement la borne de sortie de courant traversante du couvercle.

La paroi du fond du conteneur comprend une partie périphérique (3a) reliée électriquement à la paroi latérale, un opercule (3c) et une partie fragilisée (3b) autour de l'opercule joignant l'opercule à la partie périphérique. La partie fragilisée peut être une partie de plus faible épaisseur que celle de l'opercule et de la partie périphérique. La partie périphérique est reliée électriquement à la paroi latérale. La paroi latérale et les parties formant le fond sont en matière conductrice électriquement. Un faisceau électrochimique (9) comprenant une alternance d'électrodes positives et négatives séparées par un séparateur est disposé dans le conteneur autour d'un axe creux (15) qui sert de cheminée de gaz.

La membrane déformable conductrice électriquement va maintenant être décrite dans le cas particulier d'un conteneur de format cylindrique.

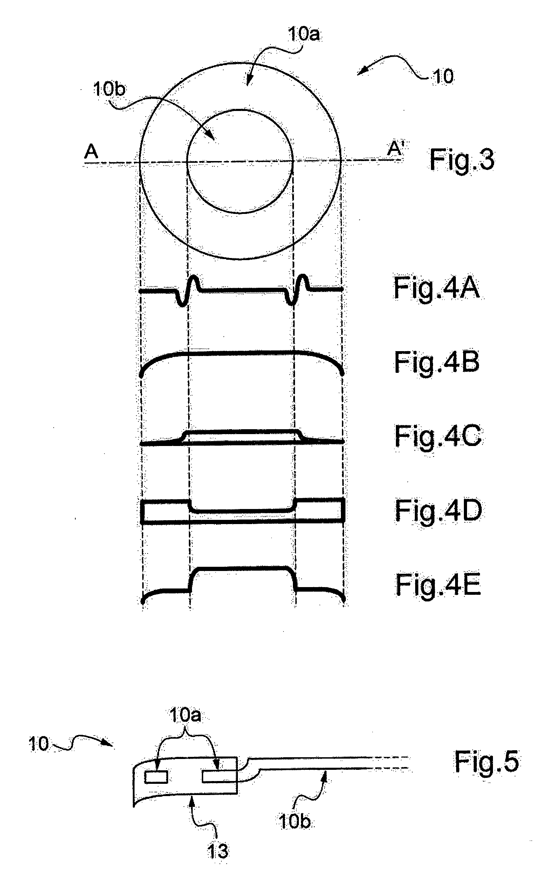

La Figure 3 représente une vue de dessus de la membrane déformable. Celle-ci présente la forme d'un disque comprenant une partie centrale (10b) et une partie périphérique (10a). Les Figures 4A à 4E sont des exemples de coupe selon l'axe A-A' de la membrane déformable. Elles montrent différentes formes que la section transversale peut prendre.

Sur la Figure 2A, on peut noter d'une part que la limite entre la partie centrale (10b) et la partie périphérique (10a) de la membrane déformable coïncide sensiblement avec la partie fragilisée (3b) de la paroi du fond du conteneur et d'autre part, que la partie périphérique (10a) de la membrane coïncide sensiblement avec la partie périphérique (3a) de la paroi du fond du conteneur. La partie centrale (10b) est en contact électrique avec des électrodes de même polarité du faisceau électrochimique. Ce contact électrique peut être obtenu par soudage de la membrane avec la surface des extrémités des feuillards de ces électrodes non recouverte de matière active.

La membrane déformable est faite d'un matériau conducteur électrique pour permettre la conduction du courant entre les électrodes et l'opercule. L'aluminium est préféré car c'est un matériau ayant une faible résistivité électrique et présentant une faible résistance mécanique. La pièce de connexion peut être en aluminium 1050 ou 1100. De préférence, on utilise également l'aluminium comme matériau de la pièce de connexion et comme matériau du conteneur. L'épaisseur de la membrane déformable est généralement comprise entre 100 et 400 microns. Une telle épaisseur permet le passage de courant d'intensité supérieure à 50 A. L'accumulateur est donc bien adapté pour des applications nécessitant une forte puissance.

Il va maintenant être décrit le fonctionnement de l'accumulateur en cas d'augmentation de la pression interne. La surpression des gaz à l'intérieur du conteneur, en cas de dysfonctionnement de l'accumulateur, crée sur l'opercule une force de poussée dirigée vers l'extérieur du conteneur. La force de poussée entraîne la rupture de la partie fragilisée. La partie fragilisée, qui peut être un amincissement, est en effet conçue pour se rompre, c'est-à-dire se déchirer. L'opercule n'est alors plus relié électriquement à la partie périphérique du fond du conteneur. La conduction du courant entre la membrane déformable et la borne de sortie de courant est rompue. La rupture de la partie fragilisée permet donc d'une part d'interrompre la conduction électrique entre les électrodes d'une polarité et la borne de sortie de courant de polarité correspondante, et d'autre part d'empêcher à la pression à l'intérieur du conteneur de continuer à augmenter. Elle agit donc comme une soupape de sécurité. L'épaisseur de l'amincissement peut être ajustée en fonction de la pression d'ouverture et la tenue mécanique du conteneur recherchées. Le matériau du conteneur est de préférence en aluminium. L'acier nickelé et le cuivre peuvent aussi être utilisés.

En fonction de l'épaisseur de l'amincissement, une pression d'ouverture comprise entre 4 à 20 bar est obtenue. De préférence, on choisira une épaisseur de l'amincissement telle que la pression d'ouverture soit comprise entre 8 à 12 bar. La partie périphérique du fond du conteneur non déformée empêche l'éjection du faisceau électrochimique en cas de déchirure de l'amincissement.

La présence de la membrane déformable a pour effet de retenir les gaz émis par les réactions électrochimiques à l'intérieur du conteneur. Elle oblige ces gaz à exercer une pression sur l'opercule jusqu'à sa déchirure complète. En l'absence de membrane, dès l'ouverture de l'opercule, les gaz s'évacueraient hors du conteneur de l'accumulateur et la pression sur l'opercule chuterait, ce qui ne permettrait pas une ouverture complète de l'opercule. La membrane déformable permet donc de maintenir le conteneur hermétiquement clos après déchirure de l'opercule.

La surface de la membrane déformable peut comprendre des parties fragilisées (10c), par exemple sous la forme d'un amincissement qui peut prendre différentes formes comme cela est illustré aux Figures 6A-6C. L'épaisseur de l'amincissement est calculée pour provoquer une déchirure de l'amincissement lorsque la pression à l'intérieur du conteneur de l'accumulateur dépasse une valeur seuil prédéterminée, par exemple de 15 bars.

De manière avantageuse, le conteneur peut contenir une bague isolante électriquement montée sur la partie périphérique de la paroi du fond du conteneur. Cette bague est destinée à supporter le faisceau électrochimique. Elle sert d'isolant électrique afin d'empêcher un contact électrique entre la tranche d'une électrode du faisceau et la paroi du conteneur reliée à une électrode de polarité inverse, ce qui pourrait occasionner un court-circuit interne après ouverture de l'opercule. Le faisceau électrochimique n'est pas en appui sur l'opercule, mais seulement sur la partie périphérique par le biais de la bague isolante. En conséquence, suite à des chocs, le poids du faisceau n'exerce pas de force sur l'opercule et donc n'entraîne pas une rupture de la partie fragilisée.

Dans les deux modes de réalisation décrits ci-après, une pièce de connexion est utilisée. Elle est positionnée entre l'extrémité des électrodes d'une même polarité située au fond du conteneur et la membrane déformable.

Les figures 7A et 7B sont des vues en coupe longitudinale du fond du conteneur d'un accumulateur selon un deuxième mode de réalisation de l'invention dans lequel la pièce de connexion est une lamelle métallique flexible en forme de U. Une des branches du U est reliée électriquement au feuillard des électrodes de même polarité dépassant d'une extrémité du faisceau électrochimique. L'autre branche du U est reliée électriquement à la membrane déformable conductrice électriquement (10), elle-même en contact électrique avec l'opercule.

La membrane déformable est prise en sandwich entre la pièce de connexion et l'opercule. De manière préférée, le point de contact entre la pièce de connexion, la membrane déformable ainsi que le point de contact entre la membrane déformable et l'opercule sont soudés. Le soudage de la pièce de connexion avec la membrane déformable et l'opercule peut être effectué par laser dirigé sur la paroi extérieure du fond du conteneur.

Selon un troisième mode de réalisation, représenté aux Figures 8A et 8B, la pièce de connexion est souple et comprend :
- une partie de connexion (11a) destinée à être reliée électriquement au feuillard des électrodes dépassant d'une extrémité du faisceau électrochimique,
- une partie centrale (11b) destinée à être fixée à la membrane déformable et
- des lamelles (11c) flexibles, identiques reliant la partie centrale à la partie de connexion.

Par pièce souple, on entend une pièce se déformant lorsque la surpression pousse l'opercule vers l'extérieur, la pièce de connexion étant solidaire de l'opercule.

Les lamelles sont spiralées, c'est-à-dire qu'elles ont une forme courbée qui s'éloigne progressivement de la partie centrale (11b). Les lamelles sont réparties régulièrement autour de la partie centrale (11b). Les lamelles peuvent être spiralées en tournant vers la droite ou vers la gauche. Sur les figures 9A et 9B, les lamelles tournent vers la droite. Elles sont au nombre de 4 formant sensiblement une croix en forme de svastika. Le nombre d'ailettes peut être supérieur à 4 ou au nombre de 3. Le fait d'avoir des ailettes de cette forme permet de rendre mobile la partie centrale par rapport à la partie de connexion en déplaçant la partie centrale selon un mouvement hélicoïdal dont l'axe passe par le centre de la partie centrale. Ce mouvement de la partie centrale est dû au fait que les ailettes sont spiralées et qu'elles fléchissent. Ainsi, lors du mouvement hélicoïdal, les ailettes se déforment en fléchissant, se déployant (c'est-à-dire deviennent de moins en moins courbées).

Grâce au mouvement hélicoïdal effectué par la pièce de connexion, l'opercule se trouve après déchirure de l'amincissement dans une position sensiblement parallèle à sa position avant rupture de l'amincissement. L'opercule est guidé lors de la déchirure de la partie fragilisée. Grâce au mouvement hélicoïdal de guidage effectué par la pièce de connexion sur l'opercule, la rupture de la partie fragilisée autour de l'opercule s'effectue totalement. En conséquence, l'opercule est assurément déconnecté de la partie périphérique. Ceci permet d'assurer que l'opercule ne soit plus en contact avec la partie périphérique. Par conséquent, ce troisième mode de réalisation offre, en comparaison avec celui dans lequel la pièce de connexion est une languette métallique (Figures 7A et 7B), une meilleure garantie de déconnexion électrique entre les électrodes d'une polarité et la borne de sortie de courant associée.

Dans les modes de réalisation illustrés aux Figures 7A, 7B, 8A et 8B, la partie périphérique (10a) de la membrane déformable est isolée électriquement des électrodes et de l'opercule (3c). Cet isolement électrique peut être obtenu en enroulant dans une première étape un film plastique isolant autour du faisceau électrochimique en laissant libre la partie des électrodes devant être connectée à la membrane déformable et en plaçant la membrane déformable de façon à ce que sa partie périphérique prenne appui sur le film plastique isolant, puis dans un deuxième étape, en recouvrant la partie périphérique de la membrane déformable par un film plastique isolant. L'isolement électrique de la partie périphérique de la membrane peut également être obtenu en réalisant une gaine (13) d'un matériau isolant électrique autour de la partie périphérique (10a) de la membrane. Ce matériau isolant électrique peut être surmoulé, laminé ou collé à la membrane. Le gainage par un matériau isolant est illustré à la Figure 5. Le matériau isolant peut être choisi parmi le polyétherimide, le polypropylène et le polyéthylène.

Un procédé de fabrication possible de l'accumulateur selon l'invention est maintenant décrit. Cette description se réfère en particulier au procédé de fabrication d'un accumulateur cylindrique de type lithium ion. Mais il est entendu que l'invention concerne aussi d'autres technologies d'accumulateurs, ainsi que tout format de conteneur tel que le format rectangulaire.

On fabrique le faisceau électrochimique en superposant au moins une électrode, au moins un séparateur et au moins une électrode négative. L'électrode positive est constituée d'un collecteur de courant, qui peut être un feuillard en aluminium, recouvert de matière active constituée d'un oxyde lithié de métaux de transition tel que LiCoO₂, LiNiO₂, LiMnO₂, LiMn₂O₄, ou un matériau phosphate de type LiMPO₄ (avec M=Mn, Fe ou en mélange) ou un mélange de ceux-ci.

L'électrode négative est constituée d'un collecteur de courant, qui peut être un feuillard en cuivre, recouvert de matière active constituée d'un matériau capable d'insérer réversiblement du lithium tel que le graphite, le coke, le carbone vitreux et le noir de carbone.

Le séparateur peut être en polyoléfine.

On enroule le faisceau électrochimique autour d'un axe creux qui sert de cheminée pour le passage des gaz. A chacune des extrémités du faisceau électrochimique dépasse la portion de surface des feuillards des électrodes positives et négatives non recouverte de matière active. On soude à l'extrémité destinée à être disposée dans le fond du conteneur la membrane déformable. Puis, on enroule de préférence un film plastique isolant, par exemple de polyimide (Kapton®), autour du faisceau électrochimique et de la membrane déformable en laissant libre au moins une partie de la surface de la membrane déformable. Ce film permet d'isoler électriquement le faisceau électrochimique de la paroi du conteneur. On évite ainsi tout risque de court-circuit avec la paroi latérale du conteneur.

On fixe sur les électrodes dépassant de l'extrémité du faisceau électrochimique destinée à être placée du côté du couvercle, une pièce de connexion permettant de conduire le courant des électrodes vers la borne de sortie de courant correspondante. On introduit le faisceau électrochimique muni à l'une de ses extrémités de la membrane déformable et à l'autre extrémité de la pièce de connexion dans le conteneur. L'extrémité du faisceau électrochimique muni de la membrane déformable est introduite en premier dans le conteneur.

On aura préalablement réalisé une zone de fragilisation de la paroi du fond du conteneur en créant par exemple un amincissement d'une portion de la paroi du fond du conteneur par emboutissage du matériau du conteneur au moyen d'une presse.

L'imprégnation des électrodes et des séparateurs ainsi que le remplissage du conteneur par l'électrolyte est effectué sous dépression d'air dans le conteneur. L'électrolyte est constitué d'un sel de lithium dissous dans un solvant organique. On ferme le conteneur de façon étanche en soudant sur l'extrémité ouverte du conteneur, un couvercle muni de bornes de sortie de courant.

Dans les deuxième et troisième modes de réalisation décrits ci-dessus, on fixe une pièce de connexion aux électrodes d'une même polarité avant de fixer la membrane déformable. Le procédé peut alors comprendre les étapes suivantes :
a) mise à disposition du faisceau électrochimique;
b) fixation de la pièce de connexion sur le faisceau électrochimique;
c) éventuellement enroulement d'un film plastique isolant autour du faisceau électrochimique en laissant libre au moins une partie de la pièce de connexion ;
d) fixation de la membrane déformable sur la partie de la pièce de connexion laissée libre ;
e) introduction du faisceau électrochimique muni de la pièce de connexion, du film plastique et de la membrane déformable dans le conteneur.

Dans un mode de réalisation préféré, on soude par transparence à l'aide d'un laser le point de contact entre la pièce de connexion et la membrane déformable ainsi que le point de contact entre la membrane déformable et l'opercule. Ceci peut être réalisé même après que le faisceau électrochimique ait été introduit dans le conteneur. On dirige le faisceau laser sur la paroi externe du conteneur. Il s'ensuit une soudure entre la membrane déformable et l'opercule et éventuellement la pièce de connexion, si elle utilisée.

## Revendications

1. Conteneur (2) d'accumulateur étanche destiné à contenir un faisceau électrochimique (9), le conteneur comprenant une paroi formant un fond (3) en matière conductrice électriquement comprenant :
- une partie périphérique (3a),
- un opercule (3c),
- une partie fragilisée (3b) délimitant l'opercule, joignant la partie périphérique à l'opercule, adaptée à se rompre lors d'une surpression à l'intérieur du conteneur,
dans lequel conteneur est disposée une membrane déformable conductrice électriquement (10) reliant électriquement des électrodes d'une même polarité d'un faisceau électrochimique à l'opercule,
et dans lequel conteneur, une surpression provoque une déformation de la membrane, cette déformation entraînant une rupture de la partie fragilisée.

2. Conteneur selon la revendication 1, dans lequel est disposée une pièce de connexion (11) reliant électriquement les électrodes de même polarité du faisceau électrochimique à la membrane déformable.

3. Conteneur selon la revendication 1 ou 2, dans lequel la membrane déformable (10) a la forme d'un disque et présente une partie centrale (10b) et une partie périphérique (10a), la limite entre la partie centrale et la partie périphérique coïncidant sensiblement avec la partie fragilisée (3b), la partie périphérique (10a) de la membrane déformable coïncidant sensiblement avec la partie périphérique (3a) du fond du conteneur.

4. Conteneur selon la revendication 2 ou 3, dans lequel la membrane déformable comprend une partie centrale (10b) disposée au contact de l'opercule et une partie périphérique (10a) isolée électriquement de la pièce de connexion (11) et de l'opercule (3).

5. Conteneur selon l'une des revendications 2 à 4, dans lequel la membrane déformable (10) et/ou la pièce de connexion (11) sont en aluminium.

6. Conteneur selon l'une des revendications précédentes, dans lequel la membrane déformable (10) a une épaisseur comprise entre 100 et 400 microns.

7. Conteneur selon l'une des revendications précédentes, dans lequel la membrane déformable (10) n'est pas ajourée.

8. Conteneur selon l'une des revendications précédentes, dans lequel la membrane déformable (10) comprend au moins une partie fragilisée (10c) apte à se déchirer en cas de surpression à l'intérieur du conteneur, par exemple pour une surpression d'environ 15 bars.

9. Conteneur selon l'une des revendications 2 à 8, dans lequel la pièce de connexion (11) comprend une partie de connexion (11a) en contact avec le faisceau électrochimique (9) et une partie centrale (11b) en contact avec la membrane déformable (10).

10. Conteneur selon la revendication 9, dans lequel la pièce de connexion comprend un groupe de lamelles (11c) flexibles, spiralées, identiques, réparties régulièrement et reliant la partie centrale (11b) à la partie de connexion (11a).

11. Conteneur selon l'une quelconque des revendications 1 à 7, dans lequel la partie fragilisée (3b) a une épaisseur plus faible que celles de l'opercule (3c) et de la partie périphérique (3a).

12. Accumulateur étanche (1) comprenant :
- le conteneur (2) selon l'une des revendications 1 à 11,
- un faisceau électrochimique (9),
dans lequel une rupture de la partie fragilisée (3b) de la paroi du fond du conteneur est adaptée à interrompre la conduction électrique passant par l'opercule (3c) entre la membrane déformable (10) et une borne de sortie de courant.

13. Accumulateur selon la revendication 12, de type lithium-ion.

14. Procédé de réalisation d'une connexion électrique comprenant les étapes suivantes :
a) mise à disposition d'un faisceau électrochimique (9) comprenant au moins une électrode positive et au moins une électrode négative séparées par un séparateur;
b) raccordement électrique d'une membrane déformable (10) conductrice électriquement avec les électrodes d'une même polarité du faisceau électrochimique;
c) mise à disposition d'un conteneur (2) comprenant une paroi formant un fond (3) en matière conductrice électriquement comprenant :
- une partie périphérique (3a),
- un opercule (3c),
- une partie fragilisée (3b) délimitant l'opercule, joignant la partie périphérique à l'opercule, adaptée à se rompre lors d'une surpression à l'intérieur du conteneur,
d) introduction dans le conteneur (2) du faisceau électrochimique et de la membrane déformable de façon à ce que la membrane soit en contact avec l'opercule.

15. Procédé de réalisation d'une connexion électrique selon la revendication 14, dans lequel l'étape b) comprend les deux sous étapes suivantes :
i) raccordement électrique d'une pièce de connexion (11), autre qu'une membrane déformable conductrice électriquement, sur les électrodes d'une même polarité du faisceau électrochimique (9); puis
ii) raccordement électrique de la membrane déformable (10) conductrice électriquement sur la pièce de connexion.

## Patentansprüche

1. Behälter (2) für einen dichten Akkumulator, der dazu bestimmt ist, ein elektrochemisches Bündel (9) zu enthalten, wobei der Behälter eine einen Boden (3) bildende Wand aus elektrisch leitendem Material umfasst, welche umfasst:
- einen Umfangsteil (3a),
- ein Verschlussorgan (3c),
- einen das Verschlussorgan begrenzenden abgeschwächten Teil (3b), der den Umfangsteil mit dem Verschlussorgan verbindet und dafür eingerichtet ist, bei einem Überdruck im Inneren des Behälters zu brechen,
wobei in dem Behälter eine elektrisch leitende verformbare Membran (10) angeordnet ist, welche Elektroden gleicher Polarität eines elektrochemischen Bündels mit dem Verschlussorgan elektrisch verbindet,
und wobei in dem Behälter ein Überdruck eine Verformung der Membran hervorruft, wobei diese Verformung einen Bruch des abgeschwächten Teils zur Folge hat.

2. Behälter nach Anspruch 1, in welchem ein Verbindungsstück (11) angeordnet ist, das die Elektroden gleicher Polarität des elektrochemischen Bündels mit der verformbaren Membran elektrisch verbindet.

3. Behälter nach Anspruch 1 oder 2, wobei die verformbare Membran (10) die Form einer Scheibe hat und einen mittleren Teil (10b) und einen Umfangsteil (10a) aufweist, wobei die Grenze zwischen dem mittleren Teil und dem Umfangsteil im Wesentlichen mit dem abgeschwächten Teil (3b) zusammenfällt, wobei der Umfangsteil (10a) der verformbaren Membran im Wesentlichen mit dem Umfangsteil (3a) des Bodens des Behälters zusammenfällt.

4. Behälter nach Anspruch 2 oder 3, wobei die verformbare Membran einen mittleren Teil (10b), der in Kontakt mit dem Verschlussorgan angeordnet ist, und einen Umfangsteil (10a), der von dem Verbindungsstück (11) und dem Verschlussorgan (3) elektrisch isoliert ist, umfasst.

5. Behälter nach einem der Ansprüche 2 bis 4, wobei die verformbare Membran (10) und/oder des Verbindungsstück (11) aus Aluminium hergestellt sind.

6. Behälter nach einem der vorhergehenden Ansprüche, wobei die verformbare Membran (10) eine Dicke zwischen 100 und 400 Mikrometern aufweist.

7. Behälter nach einem der vorhergehenden Ansprüche, wobei die verformbare Membran (10) nicht durchbrochen ist.

8. Behälter nach einem der vorhergehenden Ansprüche, wobei die verformbare Membran (10) mindestens einen abgeschwächten Teil (10c) aufweist, der geeignet ist, im Falle eines Überdrucks im Inneren des Behälters zu reißen, zum Beispiel bei einem Überdruck von ungefähr 15 bar.

9. Behälter nach einem der Ansprüche 2 bis 8, wobei das Verbindungsstück (11) einen Verbindungsteil (11a), der sich in Kontakt mit dem elektrochemischen Bündel (9) befindet, und einen mittleren Teil (11b), der sich in Kontakt mit der verformbaren Membran (10) befindet, umfasst.

10. Behälter nach Anspruch 9, wobei das Verbindungsstück eine Gruppe von flexiblen, spiralförmigen, identischen Lamellen (11c) umfasst, die gleichmäßig verteilt sind und den mittleren Teil (11b) mit dem Verbindungsteil (11a) verbinden.

11. Behälter nach einem der Ansprüche 1 bis 7, wobei der abgeschwächte Teil (3b) eine Dicke aufweist, die kleiner ist als diejenige des Verschlussorgans (3c) und des Umfangsteils (3a).

12. Dichter Akkumulator (1), welcher umfasst:
- den Behälter (2) nach einem der Ansprüche 1 bis 11,
- ein elektrochemisches Bündel (9),
wobei ein Bruch des abgeschwächten Teils (3b) der Wand des Bodens des Behälters dafür eingerichtet ist, den elektrischen Leitungsweg zu unterbrechen, der über das Verschlussorgan (3c) zwischen der verformbaren Membran (10) und einer Stromausgangsklemme verläuft.

13. Akkumulator nach Anspruch 12 vom Typ eines Lithium-Ionen-Akkumulators.

14. Verfahren zur Herstellung einer elektrischen Verbindung, welches die folgenden Schritte umfasst:
a) Bereitstellen eines elektrochemischen Bündels (9), das mindestens eine positive Elektrode und mindestens eine negative Elektrode umfasst, die durch einen Separator getrennt sind,
b) elektrisches Verbinden einer elektrisch leitenden verformbaren Membran (10) mit den Elektroden gleicher Polarität des elektrochemischen Bündels;
c) Bereitstellen eines Behälters (2), der eine einen Boden (3) bildende Wand aus elektrisch leitendem Material umfasst, welche umfasst:
- einen Umfangsteil (3a),
- ein Verschlussorgan (3c),
- einen das Verschlussorgan begrenzenden abgeschwächten Teil (3b), der den Umfangsteil mit dem Verschlussorgan verbindet und dafür eingerichtet ist, bei einem Überdruck im Inneren des Behälters zu brechen,
d) Einführen des elektrochemischen Bündels und der verformbaren Membran in den Behälter (2), derart, dass sich die Membran in Kontakt mit dem Verschlussorgan befindet.

15. Verfahren zur Herstellung einer elektrischen Verbindung nach Anspruch 14, wobei Schritt b) die folgenden zwei Teilschritte umfasst:
i) elektrisches Anschließen eines Verbindungsstücks (11), das von der elektrisch leitenden verformbaren Membran verschieden ist, an die Elektroden gleicher Polarität des elektrochemischen Bündels (9); danach
ii) elektrisches Anschließen der elektrisch leitenden verformbaren Membran (10) an das Verbindungsstück.

## Claims

1. A sealed accumulator container (2) intended to contain an electrochemical bundle (9), the container comprising a wall forming a bottom (3) in an electrically conducting material, comprising:
- a peripheral portion (3a),
- a cap (3c),
- an embrittled portion (3b), delimiting the cap, joining the peripheral portion to the cap, adapted so as to break upon overpressure inside the container,
in which container is positioned an electrically conducting deformable membrane (10) electrically connecting electrodes of a same polarity of an electrochemical bundle to the cap,
and in which container, an overpressure causes deformation of the membrane, this deformation causing failure of the embrittled portion.

2. The container according to claim 1, wherein a connecting part (11) is positioned electrically connecting the electrodes of same polarity of the electrochemical bundle to the deformable membrane.

3. The container according to claim 1 or 2, wherein the deformable membrane (10) has the shape of a disc and has a central portion (10b) and a peripheral portion (10a), the limit between the central portion and the peripheral portion substantially coinciding with the embrittled portion (3b), the peripheral portion (10a) of the deformable membrane substantially coinciding with the peripheral portion (3a) of the bottom of the container.

4. The container according to claim 2 or 3, wherein the deformable membrane comprises a central portion (10b) positioned in contact with the cap and a peripheral portion (10a), electrically insulated from the connecting part (11) and from the cap (3).

5. The container according to one of claims 2 to 4, wherein the deformable membrane (10) and/or the connecting part (11) are in aluminium.

6. The container according to one of the preceding claims, wherein the deformable membrane (10) has a thickness comprised between 100 and 400 microns.

7. The container according to one of the preceding claims, wherein the deformable membrane (10) is not openworked.

8. The container according to one of the preceding claims, wherein the deformable membrane (10) comprises at least one embrittled portion (10c) capable of tearing in the case of overpressure inside the container, for example for an overpressure of about 15 bars.

9. The container according to one of claims 2 to 8, wherein the connecting part (11) comprises a connecting portion (11a) in contact with the electrochemical bundle (9) and a central portion (11b) in contact with the deformable membrane (10).

10. The container according to claim 9, wherein the connecting part comprises a bundle of identical flexible spiral-shaped lamellas (11c), regularly distributed and connecting the central portion (11b) to the connecting portion (11a).

11. The container according to any of claims 1 to 7, wherein the embrittled portion (3b) has a smaller thickness than those of the cap (3c) and of the peripheral portion (3a).

12. A sealed accumulator (1) comprising:
- the container (2) according to one of claims 1 to 11,
- an electrochemical bundle (9),
wherein failure of the embrittled portion (3b) of the wall of the bottom of the container is adapted for interrupting electric conduction via the cap (3c) between the deformable membrane (10) and a current output terminal.

13. The accumulator according to claim 12, of the lithium-ion type.

14. A method for making an electric connection comprising the following steps:
a) making an electrochemical bundle (9) available comprising at least one positive electrode and at least one negative electrode separated by a separator;
b) electrically connecting an electrically conducting deformable membrane (10) with the electrodes of same polarity of the electrochemical bundle;
c) making available a container (2) comprising a wall forming a bottom (3) in an electrically conducting material comprising:
- a peripheral portion (3a),
- a cap (3 c),
- an embrittled portion (3b) delimiting the cap, joining the peripheral portion to the cap, adapted so as to break upon overpressure inside the container;
d) introducing into the container (2) the electrochemical bundle and the deformable membrane so that the membrane is in contact with the cap.

15. The method for making an electric connection according to claim 14, wherein step b) comprises the two following sub steps:
i) electrically connecting a connecting part (11), other than an electrically conducting deformable membrane, onto the electrodes of same polarity of the electrochemical bundle (9); and then
ii) electrically connecting the electrically conducting deformable membrane (10) onto the connecting part.
